# EUROPÄISCHE PATENTSCHRIFT

(11) **EP 3 273 207 B1**
(45) Veröffentlichungstag und Bekanntmachung des Hinweises auf die Patenterteilung: **30.03.2022**
(21) Anmeldenummer: 16180757.3
(22) Anmeldetag: 22.07.2016
(51) Int. Cl.: G01F 15/00, G01F 1/06, G01F 15/14

(54) **DURCHFLUSSSENSOR MIT EINEM SENSOROBERTEIL UND EINEM SENSORUNTERTEIL**
FLOW SENSOR WITH A TOP PART AND A LOWER PART
CAPTEUR DE DÉBIT COMPRENANT UNE PARTIE SUPÉRIEURE ET UNE PARTIE INFÉRIEURE

(43) Veröffentlichungstag der Anmeldung: 24.01.2018
(73) Patentinhaber: Engelmann Sensor GmbH, 69168 Wiesloch-Baiertal (DE)
(72) Erfinder: Herrmann, Kevin, 69123 Heidelberg (DE); Sturek, Robert, 69242 Mühlhausen (DE)
(74) Vertreter: Durm Patentanwälte PartG mbB

(56) Entgegenhaltungen:
- EP-A1- 2 295 941
- WO-A1-2011/127934
- DE-B3-102009 030 828
- US-A1- 2016 084 694

## Beschreibung

Die Erfindung betrifft einen Durchflusssensor zur Bestimmung der Menge eines Fluides, das durch einen Messkanal oder durch eine Rohrleitung strömt. Der Durchflusssensor umfasst ein Sensorunterteil zur Aufnahme eines Messaufnehmers und ein Sensoroberteil zur Aufnahme eines Detektors oder Messwertumwandlers, an dessen Ausgang eine Messgröße zur Verfügung gestellt wird, die für die erfasste Flüssigkeitsmenge charakteristisch ist.

Derartige Durchflusssensoren sind im Stand der Technik in unterschiedlichen Ausführungsformen bekannt. Sie weisen in der Regel einen sehr großen Messbereich auf, in dem sie zuverlässig und genau messen können. Der Funktions- und Arbeitsbereich eines derartigen Durchflusssensors reicht in der Regel von ca. 3 Litern pro Stunde bis zu einem Durchfluss von mehr als 1.000 Liter pro Stunde. Die Messung erfolgt stets unabhängig von der Einbausituation.

Im praktischen Einsatz haben sich hierbei Durchflusssensoren bewährt, bei denen ein Flügelrad in einem Messkanal angeordnet ist.

Die Durchflusssensoren werden in Gebäuden und Haushalten eingesetzt, um aufgrund der bestimmten Menge des durchgeflossenen Fluids, in der Regel Wasser, den Verbrauch zu berechnen und die entsprechenden Kosten zu ermitteln. Hierbei ist es wichtig, dass eine exakte Messung erfolgt, um eine zuverlässige und robuste Kostenverteilung zu ermöglichen. In der Regel sind derartige Durchflusssensoren kalibriert oder geeicht. Deshalb müssen die Sensoren nicht nur exakt die Durchflussmenge messen, sondern sie auch vor Manipulation geschützt sein. Es darf nicht möglich sein, dass Dritte den Sensor öffnen oder verändern. Insbesondere muss vermieden werden, dass eine vorgenommene Manipulation nicht erkannt werden kann.

Aufgrund des Anwendungsgebiets der Durchflusssensoren und teilweise aufgrund gesetzlicher Anforderungen ist es deshalb notwendig, dass die Durchflusssensoren zum einen manipulationsfest sind, zum anderen aber Revisionen und Reparaturen von berechtigten Personen durchgeführt werden können.

Die Durchflusssensoren sind in der Regel Bestandteil eines Wasserzählers, der neben dem Durchflusssensor auch ein so genanntes Rechenwerk umfasst. Rechenwerk und Durchflusssensor sind in der Regel untrennbar miteinander verbunden. In dem Rechenwerk werden die vom Durchflusssensor aufgenommenen Messgrößen verarbeitet und an einem Display zur Anzeige gebracht. Mit dem Rechenwerk lassen sich auch Messwerte speichern, Verläufe angeben, Durchschnittswerte berechnen und Statistiken anlegen. In der Regel hat das Rechenwerk eine Schnittstelle nach Außen, so dass die erfassten Daten ausgegeben werden können. Werden zusätzlich Temperatursensoren vorgesehen, so kann der Wasserzähler als Wärmezähler oder Wärmemengenzähler verwendet werden. In diesem Fall wird auch noch die Temperatur des Wassers an zwei unterschiedlichen Messstellen gemessen.

Um die Manipulationsfestigkeit der Wasserzähler oder Wärmemengenzähler sicherzustellen, lassen sie sich nicht zerstörungsfrei öffnen. Bei einem Öffnen, auch durch befugtes Bedienpersonal, werden Teile des Gerätes zerstört, und zwar das Rechenwerk oder Teile davon. Aus Gründen der Eichung, beispielsweise bei Ablauf der Eichfrist, oder aus sonstigen Revisionsgründen, kann ein Öffnen der Geräte jedoch notwendig sein. Dies ist mit hohen Kosten verbunden, da das Öffnen zu Beschädigungen des teuren und kostenintensiven Rechenwerks führt.

In US 2016/0084694 A1 wird eine Zähleranordnung mit einem ersten Gehäuse, einem zweiten Gehäuse und einer Befestigung, die das zweite Gehäuse mit dem ersten Gehäuse verbindet, offenbart.

In WO 2011/127934 A1 wird ein Ultraschallverbrauchssensor offenbart, der einen Fließkanal für das zu messende Medium, einen oder mehrere Ultraschall Transducer zum Senden und Empfangen von Ultraschall, einen elektronischen Schaltkreis zum Betreiben des Sensors, ein Gehäuse für den Transducer und den elektronischen Schaltkreis und einen Verschlussmechanismus, der das Gehäuse relativ zum Flusskanal in Position hält, umfasst.

In DE 10 2009 030 828 B3 wird ein Wasser-/Wärmezähler offenbart, der einen in einem Unterteil angeordneten hydraulischen Geber und ein in einem Oberteil angeordnetes Zählwerk umfasst, wobei das Unterteil und das Oberteil durch zumindest eine zerstörungsfrei nicht zu lösende Verbindung miteinander verbunden sind.

Es besteht deshalb beim Stand der Technik ein Bedarf nach einem Durchflusssensor, der die sich widerstreitenden Anforderungen erfüllt, also insbesondere zum einen manipulationsfest ist, zum anderen aber befugtem Personal ein Öffnen und eine Revision ermöglicht.

Das gestellte Problem wird durch einen Durchflusssensor mit den Merkmalen des Anspruchs 1, sowie durch ein Verfahren mit den Merkmalen der Ansprüche 12 und 13 gelöst.

Der erfindungsgemäße Durchflusssensor (Sensor) zur Durchflussmessung in einer Rohrleitung umfasst ein Sensorunterteil zur Aufnahme eines Messaufnehmers und ein Sensoroberteil zur Aufnahme eines Detektors oder Messwertumwandlers. Der Messaufnehmer ist bei mechanischen Durchflusssensoren ein Flügelrad, das von Wasser umströmt und dadurch in eine Rotationsbewegung versetzt wird. Das Flügelrad setzt also die Strömungsbewegung des Fluids in eine rotatorische Bewegung um. Der Detektor registriert die Rotationsbewegung des Messaufnehmers (Flügelrad) und gibt ein elektrisches Signal ab, das von einem angeschlossenen Rechenwerk weiterverarbeitet wird, so dass eine dem Durchfluss äquivalente Messgröße angezeigt wird. Die Anzeige und die Umrechnung erfolgt in der Regel in dem an den Durchflusssensor angeschlossenen Rechenwerk. Das Rechenwerk kann als separates (externes) Gerät ausgeführt, in den Durchflusssensor integriert oder mit einem Durchflusssensor in einem gemeinsamen Gehäuse kombiniert sein.

Derartige Durchflusssensoren können auch Teil eines Gerätes zur Ermittlung der Wärmeenergie sein und werden dann mit einem oder mehreren Temperatursensoren kombiniert.

Der erfindungsgemäße Sensor weist neben dem Sensorunterteil und dem Sensoroberteil einen Sicherungsring auf, der zwischen den beiden Teilen angeordnet ist und die Teile miteinander verbindet.

Das Sensorunterteil hat ein Gehäuse, das an einem Ende einen Verbindungsbereich zur Verbindung mit dem Sensoroberteil hat. An dem anderen, gegenüberliegenden Ende weist das Sensorunterteil einen Anschlussbereich zum Anschließen des Sensors an die Rohrleitung auf. Der Anschluss erfolgt in der Regel durch Aufschrauben des Sensors auf eine T-förmige Messstelle, das in die Rohrleitung eingebracht wird. Der Anschlussbereich kann dazu ein Gewinde aufweisen.

Der bevorzugt zylindrische Verbindungsbereich des Sensorunterteils schließt mit einem nach außen ragenden Flansch ab, so dass die Außenabmessungen (bevorzugt Außendurchmesser) im Bereich des Flansches größer sind als die Außenabmessungen (bevorzugt Außendurchmesser) des Verbindungsbereichs.

Das Sensoroberteil hat ein Gehäuse mit einem kragenförmigen Verbindungsteil an seinem einen Ende. Das Verbindungsteil korrespondiert bevorzugt mit dem Verbindungsbereich des Sensorunterteils derart, dass das Verbindungsteil den Verbindungsbereich überragt. Die Außenabmessungen des Verbindungsteils sind größer als die Außenabmessungen des Flansches des Sensorunterteils. Bei bevorzugt ebenfalls zylindrisch ausgebildetem Kragen ist der Innendurchmesser des kragenförmigen Verbindungsteils größer als der Außendurchmesser des Flansches, so dass das Verbindungsteil über dem Verbindungsbereich des Sensorunterteils übergestülpt werden kann.

Der Sicherungsring ist zwischen dem Sensorunterteil und dem Sensoroberteil derart angeordnet, dass der Sicherungsring außen an dem Verbindungsbereich des Sensorunterteils und innen an den Verbindungsteilen des Sensoroberteils anliegt. Der Sicherungsring wirkt mit dem Sensoroberteil und dem Sensorunterteil derart zusammen, dass ein Lösen des Sensoroberteils von dem Sensorunterteil verhindert wird, jedenfalls solange der Sicherungsring unbeschädigt ist und nicht zerstört oder manipuliert wird.

Bevorzugt sind der Verbindungsbereich des Sensorunterteils und das Verbindungsteil des Sensoroberteils zylindrisch ausgebildet. Der korrespondierende Sicherungsring ist deshalb bevorzugt rund, besonders bevorzugt kreisförmig. Der Sicherungsring ist bevorzugt derart ausgebildet, dass er den Verbindungsbereich des Sensorunterteils umschließt.

Der Sicherungsring hat eine Wandung mit einer Außenseite und einer gegenüberliegenden Innenseite sowie zwei sich gegenüberliegende Schmalseiten. Der Querschnitt der Wandung ist bevorzugt rechteckig. Der Sicherungsring kann an seiner Außenseite an einem Ende nahe der Schmalseite einen Kragen aufweisen, der nach Außen gerichtet ist. Der Kragen kann einem sich radial nach Außen erstreckenden Flansch ähneln. Er verbreitert dann die eine Schmalseite des Sicherungsrings, so dass eine vergrößerte Anlagefläche gebildet wird. Die verbreiterte Anlagefläche an der einen Schmalseite des Sicherungsrings kann als Fläche zum Anlegen an Halteelemente des Sensorunterteils dienen. Bevorzugt weist das Sensorunterteil ein oder mehrere Halteelemente an seiner Außenseite auf, die sich an den Verbindungsbereich des Sensorunterteils anschließen. Die Halteelemente haben bevorzugt eine Anlagefläche, an der der Sicherungsring bevorzugt mit der nach Außen auskragenden verbreiterten Schmalseite anliegt, so dass der Sicherungsring in seiner Position gestützt wird.

Bevorzugt umschließt der Sicherungsring den Verbindungsbereich des Sensorunterteils derart, dass eine Schmalseite des Sicherungsrings dabei an dem nach Außen ragenden Flansch des Sensorunterteils anliegt. Der Flansch bildet den oberen Abschluss bzw. das obere Ende des Sensorunterteils und begrenzt auf diese Weise ein Bewegen des Sicherungsrings in Richtung Ende des Sensorunterteils und über das Ende hinaus.

In einer bevorzugten Ausführungsform wird also der Verbindungsbereich des Sensorunterteils an einem Ende von dem nach Außen ragenden Flansch und an dem anderen Ende von Halteelementen begrenzt. Zwischen dem Flansch und den Halteelementen erstreckt sich der Sicherungsring, der den Verbindungsbereich des Sensorunterteils umschließt.

Besonders bevorzugt ist der Verbindungsbereich des Sensorunterteils plan und eben ausgebildet. Der Sicherungsring weist bevorzugt ebenfalls eine plane Innenseite auf. Somit ist es möglich, dass der Sicherungsring gegenüber dem Sensorunterteil beweglich ist und sich verschieben, bevorzugt verdrehen lässt.

Während der Sicherungsring gegenüber dem Sensorunterteil drehbar ist, ist er bevorzugt gegenüber dem Verbindungsteil des Sensoroberteils fixiert. Es ist also keine Bewegung, auch keine Drehbewegung in Bezug auf das Sensoroberteil möglich.

Erfindungsgemäß ist der Sicherungsring als offener Ring ausgebildet, dessen beide Enden miteinander verbindbar oder verschließbar sind. Eines der Enden weist ein Rastelement auf, das andere Ende des offenen Sicherungsrings hat eine korrespondierende Rastaufnahme, in die das Rastelement einrastet. Der von dem Rastelement und der Rastaufnahme gebildete Verschluss lässt sich im montierten Zustand des Sicherungsrings nicht öffnen, also wenn der Sicherungsring geschlossen und zwischen Sensoroberteil und Sensorunterteil positioniert ist.

In einer bevorzugten Ausführungsform weist der Sicherungsring ein Arretierungselement auf, das eine feststehende, an der Außenseite angeordnete Lasche oder einen Steg umfasst. Das Arretierungselement hat bevorzugt eine Sollbruchstelle, die von befugtem Bedienpersonal bewusst zerstört werden kann, damit eine Arretierung gelöst wird. Bevorzugt weist das Sensoroberteil eine korrespondierende Aussparung in dem Verbindungsteil auf, so dass beispielsweise die von dem Verbindungsteil gebildete Umfangswand unterbrochen ist und eine Öffnung hat. Das Arretierungselement des Sicherungsrings erstreckt sich bevorzugt in die Aussparung in dem Verbindungsteil, so dass das Arretierungselement von Außen zugänglich ist. Bevorzugt korrespondieren das Arretierungselement und die Aussparung derart miteinander, dass eine Bewegung des Sicherungsrings relativ zu dem Verbindungsteil des Sensoroberteils verhindert wird und unmöglich ist. Der Sicherungsring lässt sich also nicht relativ zu dem Sensoroberteil bewegen.

Bevorzugt hat der Sicherungsring an seiner Außenseite Rasthaken. Die Rasthaken können beispielsweise federnd ausgebildet sein und sich nach Außen erstrecken. Sie können zungenförmig sein. Besonders bevorzugt erstrecken sich die Rasthaken in Umfangsrichtung des Sicherungsrings nach Außen. In einer bevorzugten Ausführungsform sind die Rasthaken in die Außenwandung des Sicherungsrings integriert, so dass Teile der Außenwandung von dem Rasthaken gebildet werden.

Das Sensoroberteil hat in seinem Verbindungsteil bevorzugt Rastausnehmungen, die mit den Rasthaken des Sicherungsrings korrespondieren. Die Rasthaken des Sicherungsrings können sich im montierten Zustand, d. h. wenn der Sicherungsring in seiner vorgesehenen Position zwischen Sensoroberteil und Sensorunterteil positioniert ist, in die Rastausnehmungen des Sensoroberteils erstrecken und mit diesem verrasten. Bevorzugt können die Rastausnehmungen beispielsweise in Form von Taschen oder Einbuchtungen ausgebildet sein, die sich bevorzugt über einen Teil der Höhe des Verbindungsteils des Sensoroberteils erstrecken.

Um das Verrasten der Rasthaken des Sicherungsrings mit den Rastausnehmungen des Sensoroberteils zu erleichtern und ein zuverlässiges Verrasten zu gewährleisten, können die Rasthaken eine Fase aufweisen, so dass ein Überstülpen des Sensoroberteils über den am Sensorunterteil montierten Sicherungsring erleichtert wird. Die Fase ist bevorzugt an der Seite des Rasthakens angeordnet, die dem Kragen des Sicherungsrings abgewandt ist. Beim Überstülpen des Sensoroberteils werden mit Hilfe der Fase die Rasthaken nach Innen gedrückt, so dass ein Verkanten vermieden wird. Zusätzlich oder alternativ können die Rasthaken auch an einer Ecke abgeschrägt sein, bevorzugt an der oberen Ecke, so dass sich das freie Ende des Rasthakens gegenüber dem feststehenden Ende verjüngt.

Der Durchflusssensor kann gemeinsam mit einem Rechenwerk einen Wasserzähler oder mit zusätzlichen Temperaturfühlern einen Wärmemengenzähler bilden. Bevorzugt weist der Durchflusssensor an seinem Sensoroberteil einen Adapter auf, der zur Aufnahme oder zur Verbindung mit dem Rechenwerk ausgebildet und geeignet ist. Der Adapter kann unterschiedliche Formen aufweisen, beispielsweise kann es sich hierbei um ein Montageelement oder um ein Gehäuseteil des Rechenwerks handeln. Der Adapter bildet beispielsweise das Gehäuseunterteil des Rechenwerks, welches lediglich ein Gehäuseoberteil aufweist, das mit dem Adapter des Durchflusssensors korrespondiert.

Erfindungsgemäß erfolgt das sichere Verbinden des Sensorunterteils und des Sensoroberteils des Durchflussmessers in mehreren Schritten. Zunächst wird ein wie oben beschriebenes Sensorunterteil zur Aufnahme eines Messaufnehmers bereitgestellt, das ein Gehäuse mit einem Verbindungsbereich zur Verbindung mit dem Sensoroberteil hat. Ein Sicherungsring und ein Sensoroberteil zur Aufnahme eines Detektors werden ebenfalls bereitgestellt. Das Sensoroberteil hat ein Gehäuse mit einem kragenförmigen Verbindungsteil an seinem einen Ende. Die Innenabmessungen des Verbindungsteils sind größer als die Außenabmessungen eines Flansches des Sensorunterteils, so dass das Verbindungsteil über den Verbindungsbereich des Sensoroberteils gestülpt werden kann.

Der offene Sicherungsring, dessen eines Ende als Rastelement und dessen anderes Ende als Rastaufnahme ausgebildet ist, wird um den Verbindungsbereich des Sensor-Elements gelegt. Bevorzugt wird der Verbindungsring (Sicherungsring) dabei so positioniert, dass er zwischen dem Flansch am oberen Ende des Verbindungsbereichs und einem oder mehreren Halteelementen am gegenüberliegenden Ende des Verbindungsbereichs positioniert ist. Der noch offene Sicherungsring umschließt nun den Verbindungsbereich des Sensorunterteils und wird in einem weiteren Schritt geschlossen, wobei ein Verrasten des Rastelements an einem Ende mit der korrespondierenden Rastaufnahme am anderen Ende des Sicherungsrings erfolgt.

In einem weiteren Schritt wird das Sensoroberteil mit seinem Verbindungsteil über das Sensorunterteil mit dem bereits vormontierten Sicherungsring gestülpt. Das Verbindungsteil wird über den Flansch und den Verbindungsbereich des Sensorunterteils bewegt, so dass der Verbindungsbereich des Sensorunterteils und der daran angeordnete Sicherungsring von dem Verbindungsteil des Sensoroberteils verdeckt werden. Bevorzugt verrasten während des Überstülpens die an der Außenseite des Sicherungsrings angeordneten Rasthaken mit korrespondierenden Rastausnehmungen an der Innenseite des Verbindungsteils des Sensoroberteils. Sensoroberteil und Sensorunterteil sind dann mittels des Sicherungsrings miteinander verbunden. Das Verbindungsteil des Sensoroberteils ragt bevorzugt über den gesamten Sicherungsring und besonders bevorzugt zusätzlich über einen Teil der Halteelemente.

Erfindungsgemäß hat das Sensoroberteil in seinem Verbindungsteil eine Aussparung, die mit einem Arretierungselement des Sicherungsrings korrespondiert. Sensoroberteil und Sicherungsring werden so montiert und zueinander angeordnet, dass das Arretierungselement von Außen zugänglich und sichtbar ist. Das Arretierungselement gewährleistet gemeinsam mit den Rasthaken (und Rastausnehmungen), dass eine Relativbewegung zwischen Sensoroberteil und Sicherungsring verhindert wird.

Nach Durchführung des erfindungsgemäßen Verfahrens ist ein manipulationssicherer Durchflusssensor entstanden, dessen Gehäuse nur geöffnet werden kann, wenn der Sicherungsring zwischen Sensoroberteil und Sensorunterteil beschädigt und zerstört wird. Das Sensorunterteil und das Sensoroberteil bleiben beim Öffnen unbeschädigt.

Um den erfindungsgemäßen Durchflusssensor mit einem Sensoroberteil und einem Sensorunterteil für Revisionszwecke zu öffnen, beispielsweise um einen Messaufnehmer im Sensorunterteil oder einen Detektor im Sensoroberteil auszuwechseln, werden erfindungsgemäß die folgenden Schritte durchgeführt.

Wie oben beschrieben, weist der zwischen dem Sensoroberteil und dem Sensorunterteil angeordnete Sicherungsring ein Arretierungselement auf, das sich in eine Aussparung des Verbindungsteils des Sensoroberteils erstreckt und von Außen zugänglich ist. Erfindungsgemäß wird das Arretierungselement wenigstens teilweise entfernt, so dass ein Bewegen, bevorzugt ein Verdrehen des Sicherungsrings gegenüber dem Sensoroberteil möglich ist. Das Arretierungselement wird beispielsweise durch Ausbrechen einer Lasche des Arretierungselements gelöst, was bevorzugt an einer Sollbruchstelle erfolgt.

Ein weiterer Schritt sieht das Verdrehen des Sicherungsrings in Umfangsrichtung vor, bis die Rasthaken des Sicherungsrings aus den korrespondierenden Rastausnehmungen herausbewegt werden, so dass die Verrastung zwischen den Rasthaken und den Rastausnehmungen gelöst ist. Nach Lösen der Verrastung ist ein Trennen des Sensoroberteils von dem Sensorunterteil möglich. Das Verdrehen zwischen Sensoroberteil und Sicherungsring wird bevorzugt dadurch möglich, dass sich die zungenförmigen Rasthaken in Umfangsrichtung erstrecken und bevorzugt alle Rasthaken gleich orientiert sind. Die bevorzugt federnde Ausbildung der Rastzungen (Rasthaken) erleichtert die Relativbewegung aus den Rastausnehmungen heraus und somit das Lösen der fixierten Verbindung zwischen Sensoroberteil und Sicherungsring.

In einem abschließenden Schritt erfolgt ein Auseinanderbewegen des Sensoroberteils und des Sensorunterteils quer zur Umfangrichtung des Sicherungsrings, bevorzugt in Axialrichtung des Durchflusssensors. Auf diese Weise sind der Messaufnehmer im Sensorunterteil und/oder der Detektor im Sensoroberteil zugänglich für eine Revision. Sie können kontrolliert entnommen oder ausgetauscht werden.

Die vorliegende Erfindung wird anhand der nachfolgenden Figuren beispielhaft näher erläutert. Die dort beschriebenen Ausführungsformen und die gezeigten Elemente können einzeln oder in geänderter Kombination in alternativen Ausführungsformen vorgesehen sein. Es zeigen:
- Figur 1: eine Explosionszeichnung des erfindungsgemäßen Durchflusssensors;
- Figur 2: eine Explosionszeichnung eines erweiterten Durchflusssensors mit einem Wandhalter und Rechenwerk;
- Figur 3: eine alternative Ausführungsform eines erfindungsgemäßen Durchflusssensors mit Rechenwerk;
- Figur 4: einen Ausschnitt einer Schnittzeichnung durch einen Durchflusssensor gemäß Figur 3;
- Figur 5a: eine Schnittzeichnung durch den Durchflusssensor gemäß Figur 3;
- Figur 5b: eine Detailzeichnung;
- Figur 6a: eine angeschnittene Draufsicht auf einen Durchflusssensor gemäß Figur 3;
- Figur 6b, 6c: Detailansichten aus Figur 6a;
- Figur 7a, 7b: Draufsicht und Seitenansicht eines Sicherungsrings des Durchflusssensors in offenem und geschlossenem Zustand.

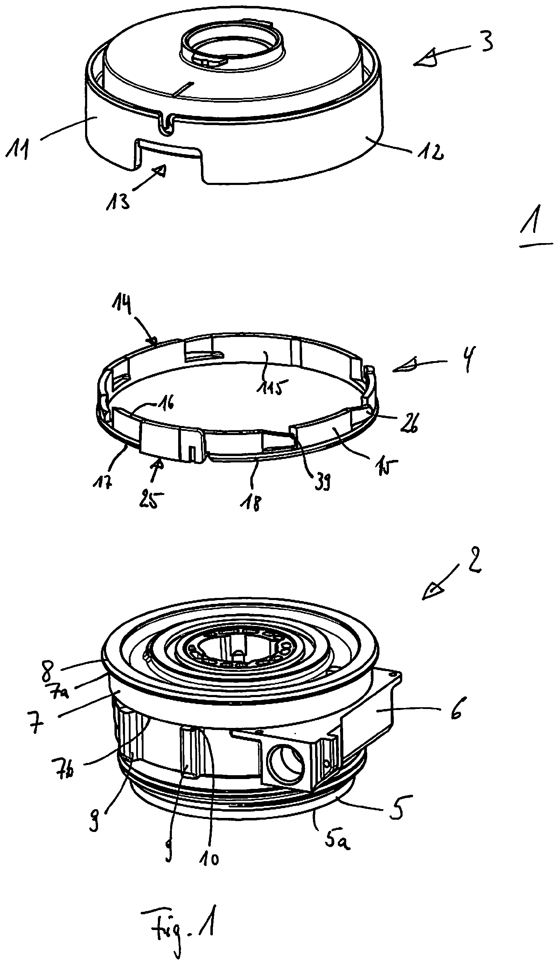

Figur 1 zeigt einen erfindungsgemäßen Durchflusssensor 1 mit einem Sensorunterteil 2, einem Sensoroberteil 3 und einem dazwischen angeordneten Sicherungsring 4. Sensorunterteil 2 und Sensoroberteil 3 sind bevorzugt im Wesentlichen zylindrisch ausgebildet. Um das Sensorunterteil 2 an eine Rohrleitung oder einen in der Regel zylindrischen Messkanal anzuschrauben, weist das Sensorunterteil 2 bevorzugt einen zylindrischen Anschlussbereich 5 an seinem sogenannten unteren Ende 5a auf. Der Anschlussbereich 5 hat vorzugsweise ein Gewinde, um den Durchflusssensor 1 mit einer hier nicht dargestellten Rohrleitung zu verschrauben. Das sogenannte untere Ende ist das dem Sicherungsring 4 abgewandte Ende des Sensorunterteils 2.

An dem dem Anschlussbereich 5 gegenüberliegenden Ende hat das Sensorunterteil 2 an seinem Gehäuse 6 einen Verbindungsbereich 7, der auch als Ringaufnahme oder Ringaufnahmebereich bezeichnet wird. Am freien Ende 7a des Verbindungsbereichs 7 hat das Gehäuse 6 des Sensorunterteils 2 einen nach Außen ragenden kragenförmigen Flansch 8, der den Verbindungsbereich 7 begrenzt. Am gegenüberliegenden Ende 7b des Verbindungsbereichs 7 schließen sich mehrere Halteelemente 9 an, die den Verbindungsbereich 7 zu der dem Flansch 8 gegenüberliegenden Seite (7b) begrenzen. Die Halteelemente 9 weisen eine Anlagefläche 10 auf, die zum Verbindungsbereich 7 gerichtet ist und vorzugsweise senkrecht oder im Wesentlichen senkrecht zum Verbindungsbereich 7 ausgerichtet ist.

Wie in dem Beispiel gemäß Figur 1 gezeigt, kann der Verbindungsbereich 7 plan und vorzugsweise eben sein. Er ist, wie hier gezeigt, bevorzugt zylindrisch ausgebildet.

Das Sensorunterteil 2 des Durchflusssensors 1 dient zur Aufnahme eines Messaufnehmers, der bei klassischen mechanischen Durchflusssensoren in Form eines Flügelrads ausgebildet ist. Das hier nicht dargestellte Flügelrad hat ein metallisches Element, dessen Drehbewegung von einem Detektor im Sensoroberteil 3 detektiert werden kann. Auf die Einzelheiten des Innenlebens des Sensorunterteils 2 wird hier nicht eingegangen, da sie nicht für die Erfindung relevant sind.

Das Sensoroberteil 3 hat ein Gehäuse 11 mit einem kragenförmigen Verbindungsteil 12, das bevorzugt ebenfalls zylindrisch ausgebildet ist, wie in Figur 1 gezeigt.

Der Innendurchmesser des Verbindungsteils 12 bzw. Kragens ist größer als der Außendurchmesser des Flansches 8, so dass das Sensoroberteil 3 mit seinem Verbindungsteil 12 über den Flansch 8 des Sensorunterteils 2 übergestülpt werden kann. Das Gehäuse 11 weist eine Aussparung 13 im Verbindungsteil 12 auf. Die Aussparung 13 ist am (unteren) Rand des Verbindungsteils 12 angeordnet, so dass sie nicht nur seitlich, sondern auch von unten, d. h. vom freien Ende des Gehäuses 11 zugänglich ist. Die Aussparung 13 korrespondiert mit einem Arretierelement 25 des Sicherungsrings 4.

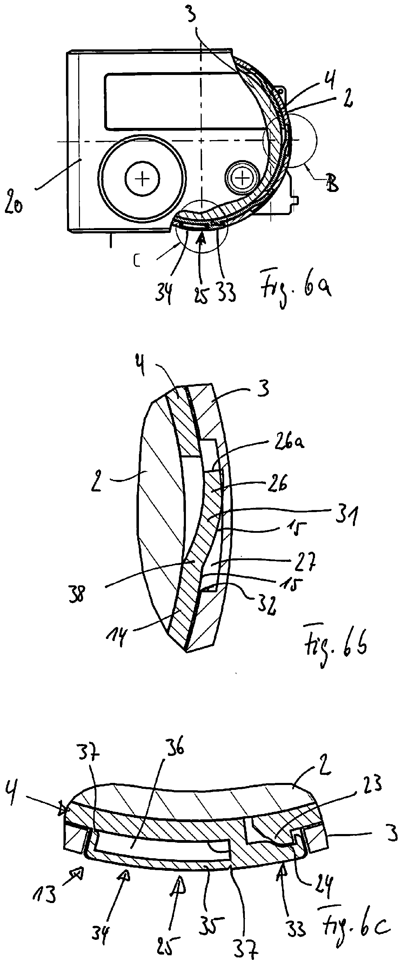

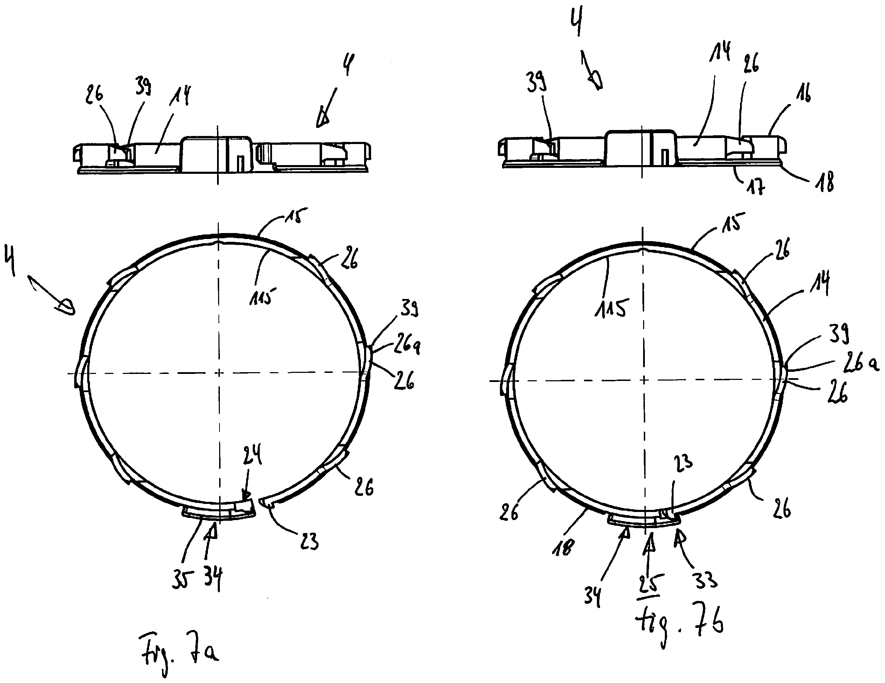

Der zwischen dem Sensorunterteil 2 und dem Sensoroberteil 3 angeordnete Sicherungsring 4 ist auch detailliert in den Figuren 7a sowie 6b und 6c gezeigt. Er hat eine Wandung 14, die bevorzugt einen rechteckigen Querschnitt aufweist. Die Wandung 14 weist eine Außenseite 15, eine gegenüberliegende Innenseite 115 sowie eine obere Schmalseite 16 und eine untere Schmalseite 17 auf. Bevorzugt hat die untere Schmalseite 17 einen nach Außen weisenden Kragen 18, der die Schmalseite 17 verbreitert.

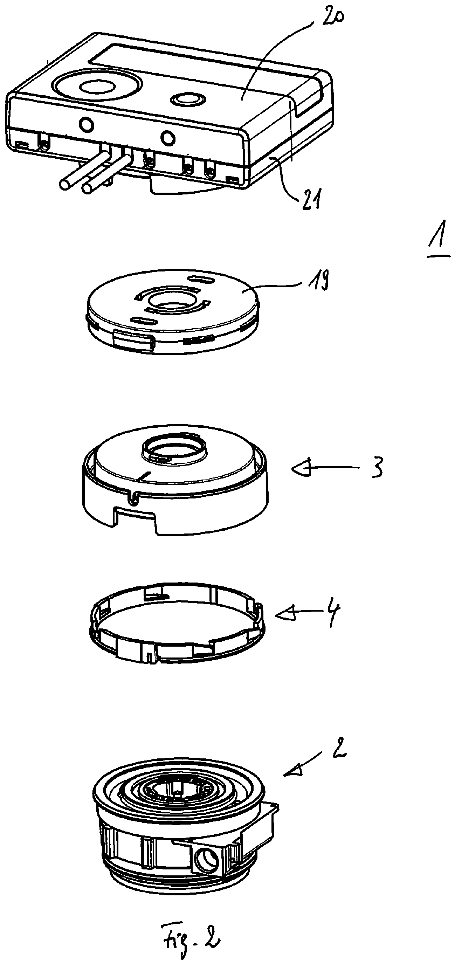

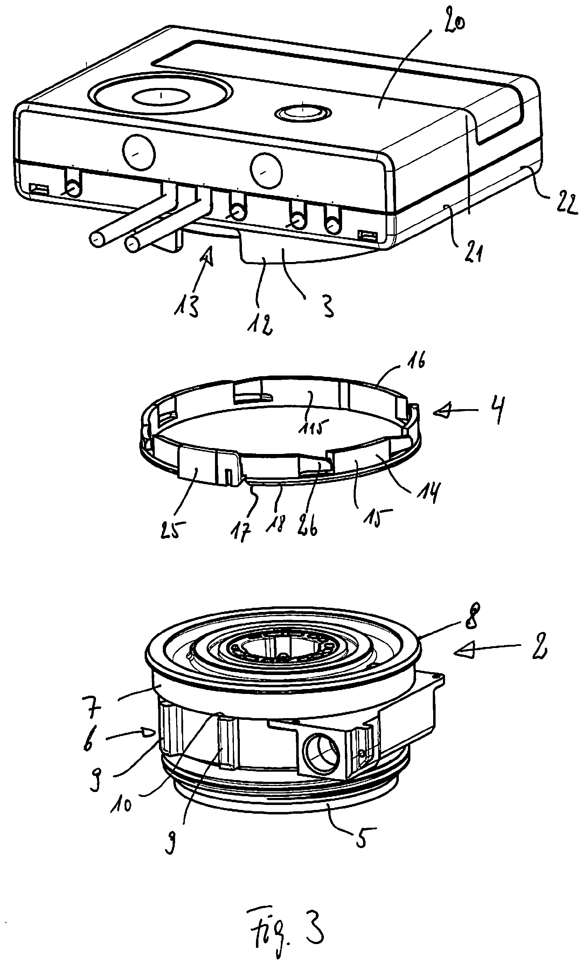

Die Figuren 2 und 3 zeigen alternative Ausführungsformen des erfindungsgemäßen Durchflusssensors 1. Gemäß Figur 2 gehören zu dem Durchflusssensor 1 zusätzlich eine Wandhalterung 19 sowie ein sogenanntes Rechenwerk 20, in dem die Verarbeitung der Messdaten erfolgt. Die Wandhalterung 19 hat die Funktion eines Adapters, so dass das Rechenwerk 20 mit dem Durchflusssensor 1 verbunden werden kann. Alternativ kann die Wandhalterung 19 an eine Wand geschraubt werden und dann das Rechenwerk 20 aufnehmen.

Während in der Ausführungsform gemäß Figur 2 der Durchflusssensor 1 mit Sensorunterteil 2, Sensoroberteil 3 und Sicherungsring 4 identisch zu der Ausführungsform gemäß Figur 1 ist, weicht das Sensoroberteil 3 gemäß der alternativen Ausführungsform des Durchflusssensors 1 von Figur 3 ab. Hier ist das Sensoroberteil 3 so ausgeführt, dass sein Gehäuse 11 oberhalb des Verbindungsteils 12 in Form einer Aufnahmeschale 21 ausgebildet ist. Die Aufnahmeschale 21 stellt gleichzeitig eine Unterschale 22 des Gehäuses des Rechenwerks 20 und somit einen Teil des Rechenwerkgehäuses dar. Die Aufnahmeschale 21 hat somit die Funktion eines Adapters zur Aufnahme oder zur Verbindung mit dem Rechenwerk 20. In der Ausführung gemäß Figur 2 wird dieser Adapter durch die Wandhaltung 19 realisiert.

Bei den Ausführungsformen gemäß den Figuren 1 bis 3 sind das Sensorunterteil 2 und der Sicherungsring des Durchflusssensors stets identisch. Im montierten Zustand umschließt der Sicherungsring 4 das Sensorunterteil 2 im Verbindungsbereich 7, der auch als Ringaufnahmebereich bezeichnet wird. Der Sicherungsring 4 liegt mit seiner Innenseite 115 am Verbindungsbereich 7 des Sensorunterteils 2 an. Seine obere Schmalseite 16 ist dabei dem Flansch 8 zugewandt und angenähert. Sie kann den Flansch 8 berühren. Die untere Schmalseite 17 ist den Halteelementen 9 zugewandt. Der Sicherungsring 4 kann mit der unteren Schmalseite 17 an den Anlageflächen 10 der Haltelemente 9 anliegen. Der bevorzugte Kragen 18 an der unteren Schmalseite 17 erhöht die Kontaktfläche zwischen dem Kragen 18 und den Anlageflächen 10 des Sensorunterteils 2. Bevorzugt weist das Sensorunterteil 2 mehrere Halteelemente 9 auf, die über den Umfang des Sensorunterteils 2 verteilt sein können. Die Verteilung kann gleichmäßig oder in variablem Abstand erfolgen.

Um den Sicherungsring 4 bequem am Verbindungsbereich 7 des Sensorunterteils zu montieren, ist der Sicherungsring 4 als offener Ring ausgebildet, wie er beispielsweise in den Figuren 7a und 7b gezeigt ist. Der offene Sicherungsring 4 hat an seinem einen Ende ein hakenförmiges Rastelement 23, das mit einer Rastaufnahme 24 am anderen Ende korrespondiert. Rastelement 23 und Rastaufnahme 24 verrasten miteinander, so dass der Sicherungsring 4 geschlossen wird. In dem gezeigten Beispiel gemäß den Figuren 6a, 6c, 7a und 7b ist die Rastaufnahme 24 bevorzugt Teil eines Arretierungselements 25, das mit der Aussparung 13 im Verbindungsteil 12 des Sensoroberteils 3 korrespondiert. Die Länge in Umfangsrichtung des Arretierungselements 25 entspricht der Breite der Aussparung 13 des Sensoroberteils 3. Wird das Sensoroberteil 3 über das Sensorunterteil 2 mit montiertem Sicherungsring 4 gestülpt, so ist das Arretierungselement 25 in der Aussparung 13 positioniert und von Außen zugänglich, während der Rest der Wandung 14 des Sicherungsrings 4 durch das Verbindungsteil 12 verdeckt wird. Die Länge des Arretierungselements 25 in Umfangsrichtung korrespondiert mit der Länge der Aussparung 13 in Umfangsrichtung. Das Arretierungselement 25 liegt bevorzugt mit seinen Seiten an den Rändern der Aussparung 13 an. Da sich das Arretierungselement 25 in die Aussparung 13 erstreckt, ist eine Bewegung des Sicherungsrings 4, insbesondere ein Verdrehen des Sicherungsrings 4 gegenüber dem Sensoroberteil 3 unmöglich. Ein Verdrehen des Sicherungsrings 4 gegenüber dem Sensorunterteil 2 ist aufgrund der ebenen Innenseite des Sicherungsrings 4 und der ebenen Außenseite des Verbindungsbereichs 7 nach wie vor möglich, auch wenn der Durchflusssensor 1 zusammengebaut ist.

Der Sicherungsring 4 weist in seiner Wandung 14 mehrere Rasthaken 26 auf, die bevorzugt, wie in Fig. 6b, 7a, 7b gezeigt, Teil der Wandung 14 sind. Die Rasthaken 26 erstrecken sich in Umfangrichtung derart, dass ihr freies Ende 26 in Umfangsrichtung nach Außen ausgerichtet ist. Die Rasthaken 26 sind insoweit elastisch, dass ihr freies Ende 26a in Richtung Innenseite 115 der Wandung 14 bewegt werden kann. Die Elastizität wird in der Regel durch geeignete Materialwahl ermöglicht. Dazu ist der Sicherungsring 4 bevorzugt wenigstens teilweise aus Kunststoff ausgebildet. Bevorzugt sind jedenfalls die Rasthaken 26 aus Kunststoff. Alternativ können die Rasthaken auch aus einem federnden Metall oder anderen elastischen Materialien geformt sein. Die Rasthaken 26 verfügen über eine Vorspannung, so dass das freie Ende 26a nach Außen ausgerichtet ist und über den Kragen 18 nach Außen hinausreicht.

Bevorzugt weist der Sicherungsring 4 mehrere Rasthaken 26 auf, besonders bevorzugt wenigstens drei, sehr bevorzugt wenigstens vier, weiter bevorzugt wenigstens sechs. Die Rasthaken 26 können äquidistant oder symmetrisch über den Umfang des Sicherungsrings 4 angeordnet sein. Eine gleichmäßige Verteilung der Rasthaken 26 über den Umfang verbessert den Halt und die Sicherungseigenschaften des Sicherungsrings.

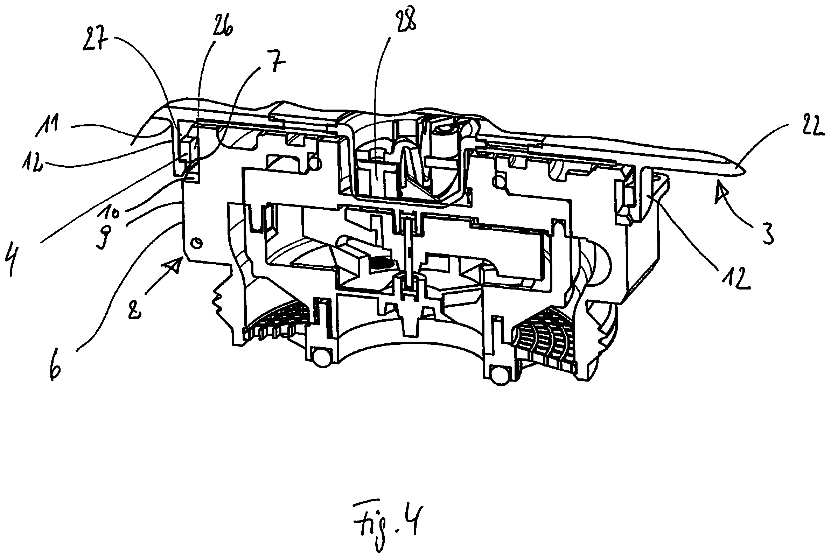

Die Rasthaken 26 des Sicherungsrings 4 sind derart ausgebildet, dass sie mit Rastausnehmungen 27 des Sensoroberteils 3 korrespondieren (vgl. Fig. 4, 5a, 5b, 6a, 6c). Das freie Ende 26a der Rasthaken 26 erstreckt sich in die Rastausnehmungen 27 und arretiert somit das Sensoroberteil 3. Sicherungsring 4 und Sensoroberteil 3 verrasten miteinander. Durch die Vorspannung der Rasthaken 26 und durch die fehlende Zugänglichkeit der Haken im montierten Zustand, da sie durch das Verbindungsteil 12 des Sensoroberteils 3 verdeckt sind, ist ein Lösen der Verrastung nach der Montage nicht mehr möglich, ohne den Sicherungsring wenigstens teilweise zu zerstören. Ein Bewegen des Sensoroberteils 3 in axialer Richtung wird durch die Rasthaken 26 verhindert, ein Verdrehen in Umfangsrichtung durch die Rasthaken 26 (in eine Drehrichtung) und durch das Arretierungselement 25 (in die andere Drehrichtung (zum freien Ende 26a hin)).

Bevorzugt weisen die Rasthaken 26 an ihrem freien Ende 26a eine Fase 39 auf, die an der dem Sensoroberteil 3 zugewandten Ecke angeordnet ist. Die Fase 39 unterstützt und vereinfacht den Zusammenbau des Durchflusssensors 3, indem die untere Kante des Verbindungsteils 12 an der Fase 39 entlang gleiten und dabei den Rasthaken 26 und insbesondere sein freies Ende 26a in Richtung Innenseite 115 des Sicherungsrings drücken kann. Somit kann der Rasthaken 26 an der Innenseite des Verbindungsteils 12 entlang bewegt werden, bis er in eine Rastausnehmung 27 des Sensoroberteils 3 einschnappt und in ihr verrastet.

Figur 4 zeigt einen Schnitt in axialer Richtung durch den zusammengebauten Durchflusssensor 1. Das Sensorunterteil 2 weist in seinem Innenraum eine Aufnahme für einen Messaufnehmer auf, der in den Figuren nicht gezeigt ist. Der Messaufnehmer ist typischerweise ein Flügelrad, das sich in dem Sensorunterteil 2 dreht. Vom Sensoroberteil 3 ist in Figur 4 nur ein Teil zu sehen, nämlich das kragenförmige Verbindungsteil 12, das über den Verbindungsbereich 7 des Sensorunterteils 2 gestülpt ist. Im Bereich des Verbindungsbereichs 7 ist zwischen dem Sensorunterteil 2 und dem Verbindungsteil 12 der Sicherungsring 4 angeordnet.

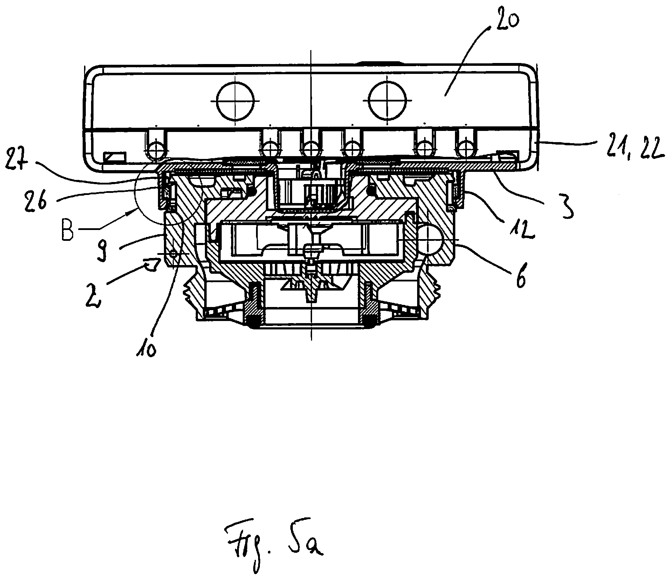

Das Sensoroberteil 3 hat bevorzugt in der Mitte und axial korrespondierend mit dem Aufnahmeraum für den Messaufnehmer einen Raum zur Aufnahme eines Detektors, beispielsweise einer Messspule oder einer Abtastspule. Eine Abtastspule 28 ist beispielsweise in Figur 5a gezeigt, die ebenfalls einen Schnitt durch einen Durchflusssensor gemäß Figur 3 zeigt.

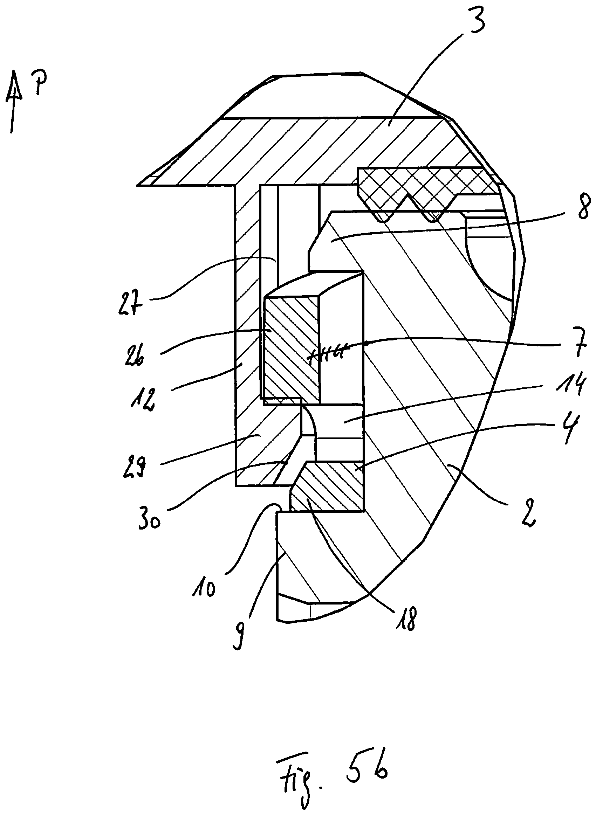

Figur 5b zeigt eine Detailzeichnung des Schnitts durch den Durchflusssensor 1 im Bereich des Verbindungsteils 12 und eine Rastausnehmung 27, in die die Rastzunge (Rasthaken 26) eingreift.

Die Wand 29 des Verbindungsteils 12 weist an seinem unteren Ende an der innen liegenden unteren Ecke eine Abschrägung 30 auf. Die Abschrägung 30 ermöglicht ein einfacheres und leichtgängigeres Überstülpen des Sensoroberteils 3 über den Sicherungsring 4 und seine Wandung 14.

Das freie Ende des gezeigten zungenförmigen Rasthakens 26 greift in die hier taschenförmig gebildete Rastausnehmung 27 ein, wobei der verbleibende rücksprungartig ausgebildete Teil der Wand 29 ein Anheben des Sensoroberteils 3 in axialer Richtung nach oben (Pfeilrichtung P in Figur 5b) verhindert. Eine Bewegung des Sensoroberteils 3 wird durch den Sicherungsring 4 unterbunden, der wiederum in seiner Bewegung in axialer Richtung nach oben durch den Flansch 8 des Sensorunterteils 2 gehalten wird. Dabei ist der Sicherungsring 4 im Verbindungsbereich 7 zwischen dem oberen Flansch 8 und den Halteelementen 9 fixiert. Das Sensoroberteil 3 wird also durch den Sicherungsring mit dem Sensorunterteil 2 verbunden und ist in axialer Richtung (bis auf ein Spiel) unbeweglich.

Da die gezeigte Konstruktionen keinen Zugriff auf den Rasthaken 26 erlaubt, kann der nach Außen vorgespannte Rasthaken 26 nicht nach Innen und damit aus der Rastausnehmung 27 des Sensoroberteils 3 hinausbewegt werden, um Sensorunterteil 2 und Sensoroberteil 3 zu trennen. Es wird auf diese Weise eine manipulationssichere Verrastung gebildet.

Neben der axialen Sicherung der Einzelteile des Durchflusssensors 1 durch den Sicherungsring 4 ist auch eine Fixierung des Sicherungsrings 4 gegenüber dem Sensoroberteil 3 in Umfangsrichtung sichergestellt. Die Figuren 6a bis 6c zeigen diesen Sicherungsmechanismus im Detail. Figur 6a stellt eine geschnittene Aufsicht auf den Durchflusssensor von oben dar, wobei das Rechenwerk 20 angeschnitten ist. Die mit B bezeichnete Stelle ist in Figur 6b im Detail gezeigt.

Der Schnitt gemäß Figur 6b stellt den Verrastungsmechanismus zwischen dem Rasthaken 26 des Sicherungsrings 4 und der Rastausnehmung 27 des Sensoroberteils 3 dar. Der in Form einer Rastzunge ausgebildete Rasthaken 26 erstreckt sich mit seinem freien Ende 26a in die Rastausnehmung 27, bevorzugt durch eine dem Rasthaken 26 eingeprägte Vorspannung. Der Rasthaken 26 verläuft von seinem Befestigungspunkt 38 an der Wandung 14 leicht abgeschrägt und verrundet in die Rastausnehmung 27. Der Figur 6b ist zu entnehmen, dass bei einer Bewegung des Sicherungsrings 4 in Umfangrichtung gegenüber dem Sensoroberteil 3 der bogenförmige Mittelteil 31 des Rasthakens 26 an der Ausnehmungsecke 32 der Rastausnehmung 27 zur Anlage kommt und durch die Ausnehmungsecke 32 nach Innen in Richtung Sensorunterteil 2 gedrückt wird. Dabei rutscht die Außenseite 15 des Mittelteils 13 an der Ausnehmungsecke 32 vorbei, so dass durch eine Drehbewegung des Sensoroberteils 3 gegenüber dem Sicherungsring 4 deren Verrastung 26 gelöst wird. Der Rasthaken 26 kommt dann außerhalb der Rastausnehmung 27 in eine Position, in der er an den Verbindungsbereich 7 des Sensorunterteils 2 gedrückt wird und an der Innenwand des Verbindungsteils 12 anliegt. Damit lässt sich das Sensoroberteil 3 nach oben abnehmen und die Verbindung zwischen Sensoroberteil 3 und Sensorunterteil 2 mit Sicherungsring 4 lösen. Der Durchflusssensor 1 kann somit auseinandergebaut werden. Die beschriebene Relativbewegung in Umfangsrichtung ist nur möglich, wenn das Arretierungselement 25 entfernt wird.

Wenn das Arretierungselement 25 in der Aussparung 13 des Sensoroberteils 3 positioniert ist, ist eine Relativbewegung zwischen Sensoroberteil 3 und Sicherungsring 4 in Umfangrichtung unterbunden und unmöglich. Dieses Detail ist in Figur 6c genauer gezeigt.

Das Arretierungselement 25 umfasst zum einen einen Verschluss 33, der aus dem Rastelement 23 und der Rastaufnahme 24 des Sicherungsrings 4 gebildet wird, wie auch ein Fixierteil, das aus einer L-förmigen Lasche oder Riegel 35 gebildet wird, der einen Hohlraum 36 zur Wandung 14 einschließt. Der L-förmige Riegel 35 weist an dem Ende des langen L-Schenkels eine Verbindung zum Verschluss 33 und am Ende des kurzen L-Schenkels zur Wandung 14 auf. An beiden Enden ist jeweils eine Sollbruchstelle 37, z. B. in Form einer Kerbe, vorgesehen.

Da das Arretierungselement 35 sich in die Aussparung 13 erstreckt, ist es von Außen zugänglich. Somit kann der Riegel 35 gelöst werden, in dem die Sollbruchstelle 37 am langen L-Schenkel des Riegels 35 aufgebrochen wird. Der Riegel 35 kann dann mittels der weiteren Sollbruchstelle 37 am Ende des kurzen L-Schenkels herausgebrochen werden. Damit wird das Arretierungselement nur noch durch den Verschluss 33 gebildet, während es im Bereich des Fixierteils lediglich die Dicke der Wandung 14 aufweist. Somit ist eine Bewegung des Sicherungsrings 4 relativ zu dem Sensoroberteil 3 möglich.

Im gezeigten Beispiel lässt sich der Sicherungsring 4 im Uhrzeigersinn gegenüber dem Sensoroberteil 3 bewegen, bis der Verschluss 33 an das (in Fig. 6c linke) Ende der Aussparung 13 anstößt. Dieser Bewegungsweg genügt jedoch, um die (in Figur 6b exemplarisch) gezeigten zungenförmigen Rasthaken 26 aus der Rastausnehmung 27 herauszuschieben. Bei entferntem Riegel 35 lässt der Durchflusssensor 1 also eine Relativbewegung zwischen Sensoroberteil 3 und Sicherungsring 4 zu, so dass die Verrastung zwischen den Rasthaken 26 und den Rastausnehmungen 27 gelöst wird. Das Sensoroberteil 3 kann nun von dem Sensorunterteil 2 getrennt werden. Allerdings setzt dies ein Zerstören des Sicherungsrings 4 voraus. Eine Manipulation des Sicherungsrings 4 kann folglich erkannt werden.

Da es sich bei dem Sicherungsring 4 um ein recht preiswertes Bauteil handelt, kann so eine einfache und kostengünstige Trennung von Sensorunterteil 2 und Sensoroberteil 3 zu Revisionszwecken des Durchflusssensors 1 erfolgen. Der Durchflusssensor 1 lässt sich später wieder zusammenbauen, indem ein neuer Sicherungsring 4 verbaut wird. Ein Trennen des Sensorunterteils 2 vom Sensoroberteil 3 ohne Zerstörung des Sicherungsrings 4 ist nicht möglich. Deshalb eignet sich ein derartiger erfindungsgemäßer Durchflusssensor 1 für den Einsatz bei geeichten und manipulationsfesten Anwendungen, die dennoch eine Revision des Durchflusssensors erfordern.

## Patentansprüche

1. Sensor zur Durchflussmessung in einer Rohrleitung umfassend ein Sensorunterteil (2) zur Aufnahme eines Messaufnehmers und ein Sensoroberteil (3) zur Aufnahme eines Detektors oder Messwertumwandlers und einen zwischen den beiden Teilen (2, 3) angeordneten Sicherungsring (4),
wobei
das Sensorunterteil (2) ein Gehäuse (6) hat, das an einem Ende einen Verbindungsbereich (7) und an dem anderen, gegenüber liegenden Ende einen Anschlussbereich (5) zum Anschließen des Sensors (1) an die Rohrleitung aufweist, und der Verbindungsbereich (7) einen nach außen ragenden Flansch (8) hat,
das Sensoroberteil (3) ein Gehäuse (11) mit einem kragenförmigen Verbindungsteil (12) an seinem Ende aufweist, dessen Abmessungen größer sind als die des Flansches (8) des Sensorunterteils (2), so dass das Verbindungsteil (12) über den Verbindungsbereich (7) des Sensorunterteils (2) übergestülpt werden kann,
der Sicherungsring (4) zwischen dem Sensorunterteil (2) und dem Sensoroberteil (3) angeordnet ist, so dass der Sicherungsring (4) an dem Verbindungsbereich (7) des Sensorunterteils (2) anliegt und mit dem Verbindungsteil (12) des Sensoroberteils (3) derart zusammenwirkt, dass ein Lösen des Sensoroberteils (3) von dem Sensorunterteil (2) verhindert wird,
der Sicherungsring (4) ein Arretierungselement (25) aufweist, wobei die Arretierung bei zwischen dem Sensorunterteil (2) und dem Sensoroberteil (3) montiertem Sicherungsring (4) nicht zerstörungsfrei zu lösen ist, wobei das Sensoroberteil (3) eine Aussparung (13) in dem Verbindungsteil (12) aufweist, in die sich das Arretierungselement (25) des Sicherungsrings (4) erstreckt, so dass das Arretierungselement (25) des Sicherungsrings (4) von außen zugänglich ist und eine Bewegung des Sicherungsrings (4) relativ zum Verbindungsteil (12) verhindert wird;
und
der Sicherungsring als offener Sicherungsring, dessen eines Ende ein Rastelement (23) und dessen anderes Ende eine Rastaufnahme (24) aufweist, zum Verschließen durch Einrasten des Rastelements (23) in der Rastaufnahme (24) ausgebildet ist.

2. Sensor nach Anspruch 1, **dadurch gekennzeichnet, dass** der Verbindungsbereich (7) des Sensorunterteils (2) und das Verbindungsteil (12) des Sensoroberteils (3) zylindrisch ausgebildet sind und der Sicherungsring (4) bevorzugt rund, besonders bevorzugt kreisförmig ist.

3. Sensor nach Anspruch 1 oder 2, **dadurch gekennzeichnet, dass** der Sicherungsring (4) den Verbindungsbereich (7) des Sensorunterteils (2) umschließt.

4. Sensor nach einem der vorherigen Ansprüche, **dadurch gekennzeichnet, dass** der Sicherungsring (4) eine Wandung (14) mit einer Außenseite (15), einer gegenüberliegenden Innenseite (115) und zwei Schmalseiten 16, 17 hat und der Querschnitt der Wandung (14) bevorzugt rechteckig ist, wobei die eine Schmalseite (16) an dem radial nach außen ragende Flansch (8) des Sensorunterteils (2) anliegt und wobei der Sicherungsring (4) bevorzugt an der anderen Schmalseite (17) einen nach außenweisenden Kragen (18) aufweist, der die Schmalseite (17) verbreitert.

5. Sensor nach einem der vorherigen Ansprüche, **dadurch gekennzeichnet, dass** Halteelemente (9) an der Außenseite des Sensorunterteils (2) an den Verbindungsbereich (7) anschließen und der Sicherungsring (4) mit einer nach außen auskragenden Schmalseite (16, 17) zu den Halteelementen (9) benachbart ist, wobei die Halteelemente (9) eine Anlagefläche (10) für die Schmalseite (16, 17) des Sicherungsrings (4) bilden und der Sicherungsring (4) bevorzugt an den Halteelementen (10) anliegt.

6. Sensor nach einem der vorherigen Ansprüche, **dadurch gekennzeichnet, dass** der Verbindungsbereich (7) des Sensorunterteils (2) plan ist und der Sicherungsring (4) eine plane Innenseite (115) aufweist, so dass der Sicherungsring (4) gegenüber dem Sensorunterteil (2) beweglich ist, bevorzugt verschiebbar, besonders bevorzugt verdrehbar.

7. Sensor nach einem der vorherigen Ansprüche, **dadurch gekennzeichnet, dass** der Sicherungsring (4) gegenüber dem Verbindungsteil (12) des Sensoroberteils (3) fixiert ist und/oder dass das Arretierungselement (25) eine Sollbruchstelle (37) aufweist.

8. Sensor nach einem der vorherigen Ansprüche, **dadurch gekennzeichnet, dass** der Sicherungsring (4) an seiner Außenseite (15) Rasthaken (26) aufweist, die bevorzugt federnd ausgebildet sind, wobei sich die Rasthaken (26) bevorzugt in Umfangsrichtung des Sicherungsrings (4) nach außen erstrecken und wobei besonders bevorzugt die Rasthaken (26) in die Wandung (14) des Sicherungsrings (4) integriert sind.

9. Sensor nach Anspruch 8, **dadurch gekennzeichnet, dass** die Rasthaken (26) eine Fase (39) aufweisen, um ein Überstülpen des Sensoroberteils (3) zu erleichtern, wobei die Fase (39) bevorzugt an dem freien Ende (26a) des Rasthakens (26) an der zum Sensoroberteil (3) und nach außen ausgerichteten Ecke angeordnet ist.

10. Sensor nach einem der vorherigen Ansprüche 8 oder 9, **dadurch gekennzeichnet, dass** das Verbindungsteil (12) des Sensoroberteils (3) Rastausnehmungen (27) aufweist, in die sich die Rasthaken (26) des Sicherungsrings (4) erstrecken und mit den Rastausnehmungen (27) verrasten.

11. Sensor nach einem der vorherigen Ansprüche, **dadurch gekennzeichnet, dass** das Sensoroberteil (3) einen Adapter zur Aufnahme oder zur Verbindung mit einem Rechenwerk (20) aufweist, wobei der Adapter ein Deckel, ein Montageelement oder die Unterschale (22) des Rechenwerks (20) sein kann.

12. Verfahren zum sicheren Verbinden eines Sensorunterteils (2) und eines Sensoroberteils (3) eines Durchflusssensors (1) umfassend die folgenden Schritte:
- Bereitstellen eines Sensorunterteils (2) zur Aufnahme eines Messaufnehmers, wobei das Sensorunterteil (2) ein Gehäuse (6) hat, das an einem Ende einen Verbindungsbereich (7) und an dem anderen, gegenüber liegenden Ende einen Anschlussbereich (5) zum Anschließen des Sensors (1) an die Rohrleitung aufweist, und der Verbindungsbereich (7) einen nach außen ragenden Flansch (8) hat,
- Bereitstellen eines Sensoroberteils (3) zur Aufnahme eines Detektors zur Detektion einer Bewegung des Messaufnehmers, wobei das Sensoroberteil (3) ein Gehäuse (11) mit einem kragenförmigen Verbindungsteil (12) an einem Ende aufweist, dessen Abmessungen größer sind als die des Flansches (8) des Sensorunterteils (2), so dass das Verbindungsteil (12) über den Verbindungsbereich (7) des Sensorunterteils (2) übergestülpt werden kann,
- Bereitstellen eines offenen Sicherungsrings (4), dessen eines Ende ein Rastelelement (23) und dessen anderes Ende eine Rastaufnahme (24) aufweist,
- Legen des offenen Sicherungsrings (4) um den Verbindungsbereich (7) des Sensorunterteils (2), bevorzugt derart, dass eine Schmalseite (16, 17) des Sicherungsrings (4) an einem Halteelement (9) anliegt, das an der Außenseite des Sensorunterteils (2) an den Verbindungsbereich (7) anschließt, und dass bevorzugt eine andere Schmalseite (16, 17) des Sicherungsrings (4) an dem Flansch (8) des Sensorunterteils (2) anliegt,
- Verschließen der offenen Enden des Sicherungsrings (4) durch Einrasten des Rastelements (23) in der Rastaufnahme (24),
- Überstülpen des Sensoroberteils mit seinem Verbindungsteil (12) über den Flansch (8) und Verbindungsbereich (7) des Sensorunterteils (2) und über den Sicherungsring (4), wobei bevorzugt Rasthaken (26) an der Außenseite (15) des Sicherungsrings (4) in korrespondierende Rastausnehmungen (27) an der Innenseite des Verbindungsteils (12) des Sensoroberteils (3) einrasten und so dass das Sensoroberteil (3) mit dem Sensorunterteil (2) verbunden wird, und wobei ein Arretierungselement (25) des Sicherungsrings (4) in einer Aussparung (13) in dem Verbindungsteil (12) des Sensoroberteils (3) angeordnet ist.

13. Verfahren zur Revision eines Durchflusssensors (1) mit einem Sensoroberteil (3) mit Detektor, einem Sensorunterteil (2) mit Messaufnehmer und einem zwischen Sensoroberteil (3) und Sensorunterteil (2) angeordneten Sicherungsring (4),
wobei
- das Sensorunterteil (2) ein Gehäuse (6) hat, das an einem Ende einen Verbindungsbereich (7) und an dem anderen, gegenüber liegenden Ende einen Anschlussbereich (5) zum Anschließen des Sensors (1) an die Rohrleitung aufweist,
- das Sensoroberteil (3) ein Gehäuse (11) mit einem kragenförmigen Verbindungsteil (12) an einem Ende aufweist, dessen Abmessungen größer sind als die des Flansches (8) des Sensorunterteils (2), so dass das Verbindungsteil (12) den Verbindungsbereich (7) des Sensorunterteils (2) und den Sicherungsring (4) überragt und verdeckt,
- das Verbindungsteil (12) des Sensoroberteils (3) eine Aussparung (13) aufweist, in die sich ein Arretierungselement (25) des Sicherungsrings (4) derart erstreckt, dass das Arretierungselement (25) von außen zugänglich ist,
- der Sicherungsring (4) Rasthaken (26) an der Außenseite (15) aufweist, die in korrespondierende Rastausnehmungen (27) an der Innenseite des Verbindungsteils (12) des Sensoroberteils (3) einrasten und so ein Lösen des Sensoroberteils (3) von dem Sensorunterteil (2) verhindern, und
- das Arretierungselement (25) zum Arretieren des Sicherungsrings (4) durch Verhindern einer Relativbewegung zwischen Sicherungsring (4) und Sensoroberteil (3) ausgebildet ist und wobei die Arretierung bei zwischen dem Sensorunterteil (2) und dem Sensoroberteil (3) montiertem Sicherungsring (4) nicht zerstörungsfrei zu lösen ist,
umfassend die folgenden Schritte:
- Entfernen des Arretierungselements (25) des Sicherungsrings (4) durch Ausbrechen einer Lasche, bevorzugt mit einer Sollbruchstelle (37),
- Entfernen von wenigstens Teilen des Arretierungselements (25),
- Drehen des Sicherungsrings (4) in Umfangrichtung bis die Rasthaken (26) aus den korrespondierenden Rastausnehmungen (27) bewegt werden, so dass ein Lösen des Sensoroberteils (3) von dem Sensorunterteil (2) ermöglicht wird,
- Auseinanderbewegen des Sensoroberteils (3) und des Sensorunterteils (2) quer zur Umfangrichtung des Sicherungsrings (4), so dass der Messaufnehmer im Sensorunterteil (2) oder der Detektor im Sensoroberteil (3) zugänglich sind für eine Revision.

## Claims

1. Sensor for measuring flow in a pipeline, comprising a sensor lower part (2) for accommodating a measuring sensor and a sensor top part (3) for accommodating a detector or transducer, and a locking ring (4) arranged between the two parts (2, 3),
wherein
the sensor lower part (2) has a housing (6) with a connection area (7) on one end thereof and an attachment area (5) on the other, opposite end thereof, for attaching the sensor (1) to the pipeline, and the connection area (7) has a flange (8) that protrudes outwards,
the sensor top part (3) has a housing (11) with a collar-like connecting element (12) on one end thereof, the dimensions of which are greater than those of the flange (8) on the sensor lower part (2), so that the connecting element (12) can be placed over the connection area (7) of the sensor lower part (2),
the locking ring (4) is arranged between the sensor lower part (2) and the sensor top part (3), so that the locking ring (4) lies flush against the connection area (7) of the sensor lower part (2) and cooperates with the connecting element (12) of the sensor top part (3) in such manner as to prevent the sensor top part (3) from becoming detached from the sensor lower part (2),
the locking ring (4) has a detent element (25), wherein the detent cannot be released non-destructively when the locking ring (4) is fitted between the sensor lower part (2) and the sensor top part (3), wherein the sensor top part (3) has a notch (13) in the connecting element (12), into which the detent element (25) of the locking ring (4) extends so that the detent element (25) of the locking ring (4) is accessible from the outside and a movement of the locking ring (4) relative to the connecting element (12) is prevented;
and
the locking ring is embodied as an open locking ring, one end of which has a latching element (23) and the other end of which has a latching seating (24) for locking by engagement of the latching element (23) in the latching seating (24).

2. Sensor according to Claim 1, **characterized in that** the connection area (7) of the sensor lower part (2) and the connecting element (12) of the sensor top part (3) are shaped cylindrically and the locking ring (4) is preferably round, particularly preferably circular.

3. Sensor according to Claim 1 or 2, **characterized in that** the locking ring (4) surrounds the connection area (7) of the sensor lower part (2).

4. Sensor according to any one of the preceding claims, **characterized in that** the locking ring (4) has a wall (14) with an outer side (15), an opposite inner side (115) and two thin sides (16, 17), and the cross section of the wall (14) is preferably rectangular, wherein the one thin side (16) bears on the radially outwardly projecting flange (8) of the sensor lower part (2), and wherein the locking ring (4) has a collar (18) facing outwards preferably on the other thin side (17), which collar widens the thin side (17).

5. Sensor according to any one of the preceding claims, **characterized in that** retaining elements (9) on the outer side of the sensor lower part (2) adjoin the connection area (7), and the locking ring (4) with an outwardly protruding (16, 17) is adjacent to the retaining elements (9), wherein the retaining elements (9) form a contact surface (10) for the thin side (16, 17) of the locking ring (4) and the locking ring (4) preferably lies against the retaining elements (9).

6. Sensor according to any one of the preceding claims, **characterized in that** the connection area (7) of the sensor lower part (2) is flat, and the locking ring (4) has a flat inner side (115), so that the locking ring (4) is movable, preferably slidable, particularly preferably twistable relative to the sensor lower part (2) .

7. Sensor according to any one of the preceding claims, **characterized in that** the locking ring (4) is fixed relative to the connecting element (12) of the sensor top part (3), and/or that the detent element (25) has a predetermined breaking point (37).

8. Sensor according to any one of the preceding claims, **characterized in that** the locking ring (4) has locking hooks (26) on its outer side (15), which are preferably constructed resiliently, wherein the locking hooks (26) preferably extend outwardly in the circumferential direction of the locking ring (4), and wherein the locking hooks (26) are particularly preferably integrated in the wall (14) of the locking ring (4).

9. Sensor according to Claim 8, **characterized in that** the locking hooks (26) have a chamfer (39) to make it easier to fit the sensor top part (3) over them, wherein the chamfer (39) is preferably arranged on the free end (26a) of the locking hook (26) on the corner facing outwards and towards the sensor top part (3).

10. Sensor according to Claim 8 or 9, **characterized in that** the connecting element (12) of the sensor top part (3) has engaging recesses (27) into which the locking hooks (26) of the locking ring (4) protrude and lock with the engaging recesses (27).

11. Sensor according to any one of the preceding claims, **characterized in that** the sensor top part (3) has an adapter for accommodating or connecting to an arithmetic unit (20), wherein the adapter can be a cover, an assembly element or the bottom shell (22) of the arithmetic unit (20).

12. Method for securely connecting a sensor lower part (2) and a sensor top part (3) of a flow sensor (1), comprising the following steps:
- providing a sensor lower part (2) to accommodate a measuring sensor, wherein the sensor lower part (2) has a housing (6) with a connection area (7) on one end thereof and a mounting area (5) on the other, opposite end thereof for connecting the sensor (1) to the pipeline, and the connection area (7) has an outwardly protruding flange (8),
- providing a sensor top part (3) to accommodate a detector for detecting a movement of the measuring sensor, wherein the sensor top part (3) has a housing (11) with a collar-like connecting element (12) on one end, the dimensions of which are greater than those of the flange (8) of the sensor lower part (2), so that the connecting element (12) can be fitted over the connection area (7) of the sensor lower part (2),
- providing an open locking ring (4), of which one end has a latching element (23) and the other end has a latching seating (24),
- placing the open locking ring (4) around the connection area (7) of the sensor lower part (2), preferably in such a way that a thin side (16, 17) of the locking ring (4) lies flush with a retaining element (9) which adjoins the connection area (7) on the outer side of the sensor lower part (2), and that preferably another thin side (16, 17) of the locking ring (4) lies flush against the flange (8) of the sensor lower part (2),
- locking the open ends of the locking ring (4) by engaging the latching elements (23) in der latching seating (24),
- fitting the sensor top part with its connecting element (12) over the flange (8) and connection area (7) of the sensor lower part (2) and over the locking ring (4), wherein preferably locking hooks (26) on the outer side (15) of the locking ring (4) engage in corresponding engaging recesses (27) on the inner side of the connecting element (12) of the sensor top part (3) and so that the sensor top part (3) is attached to the sensor lower part (2), and wherein a detent element (25) of the locking ring (4) is arranged in a notch (13) in the connecting element (12) of the sensor top part (3) .

13. Method for inspecting a flow sensor (1) having a sensor top part (3) with detector, a sensor lower part (2) with measuring sensor and a locking ring (4) arranged between sensor top part (3) and sensor lower part (2),
wherein
- the sensor lower part (2) has a housing (6) which has a connection area (7) on one end thereof and a mounting area (5) on the other, opposite end thereof for mounting the sensor (1) on the pipeline,
- the sensor top part (3) has a housing (11) with a collar-like connecting element (12) on one end, the dimensions of which are greater than those of the flange (8) on the sensor lower part (2), so that the connecting element (12) protrudes over and covers the connection area (7) of the sensor lower part (2) and the locking ring (4),
- the connecting element (12) of the sensor top part (3) has a notch (13) into which a detent element (25) of the locking ring (4) protrudes in such manner that the detent element (25) is accessible from outside,
- the locking ring (4) has locking hooks (26) on the outer side (15) thereof, which engage in corresponding engaging recesses (27) on the inner side of the connecting element (12) of the sensor top part (3), thereby preventing the sensor top part (3) from becoming detached from the sensor lower part (2), and
- the detent element (25) is designed to lock the locking ring (4) by preventing a relative movement between locking ring (4) and sensor top part (3), and wherein the locking arrangement cannot be released non-destructively when the locking ring (4) is fitted between the sensor lower part (2) and the sensor top part (3),
comprising the following steps:
- removing the detent element (25) of the locking ring (4) by breaking out a tab, preferably with a predetermined breaking point (37),
- removing at least parts of the detent element (25),
- rotating the locking ring (4) in the circumferential direction until the locking hooks (26) are moved out of the corresponding engaging recesses (27), thereby enabling a release of the sensor top part (3) from the sensor lower part (2),
- moving the sensor top part (3) and the sensor lower part (2) away from each other transversely to the circumferential direction of the locking ring (4), so that the measuring sensor in the sensor lower part (2) or the detector in the sensor top part (3) are accessible for an inspection.

## Revendications

1. Capteur, destiné à mesurer un débit dans une conduite, comprenant une partie inférieure (2) de capteur, destinée à recevoir un élément capteur et une partie supérieure (3) de capteur, destinée à recevoir un détecteur ou transducteur et une bague de retenue (4), placée entre les deux pièces (2, 3),
la partie inférieure (2) de capteur étant munie d'un boîtier (6), qui sur une extrémité, comporte une zone d'assemblage (7) et sur une autre extrémité opposée comporte une zone de raccordement (5), destinée à raccorder le capteur (1) sur la conduite, et la zone d'assemblage (7) étant munie d'une bride (8) saillant vers l'extérieur,
la partie supérieure (3) de capteur comportant un boîtier (11), doté sur son extrémité d'une pièce d'assemblage (12) en forme de collet, dont les dimensions sont supérieures à celles de la bride (8) de la partie inférieure (2) de capteur, de telle sorte que la pièce d'assemblage (12) puisse être emmanchée par-dessus la zone d'assemblage (7) de la partie inférieure (2) de capteur,
la bague de retenue (4) étant placée entre la partie inférieure (2) de capteur et la partie supérieure (3) de capteur, de telle sorte que la bague de retenue (4) soit adjacente à la zone d'assemblage (7) de la partie inférieure (2) de capteur et coopère avec la pièce d'assemblage (12) de la partie supérieure (3) de capteur, de sorte à empêcher une désolidarisation de la partie supérieure (3) de capteur de la partie inférieure (2) de capteur,
la bague de retenue (4) comportant un élément de blocage (25), lorsque la bague de retenue (4) est montée entre la partie inférieure (2) de capteur et la partie supérieure (3) de capteur, le blocage ne pouvant pas être désolidarisé de manière non destructive, la partie supérieure (3) de capteur comportant une encoche (13) dans la pièce d'assemblage (12), dans laquelle s'étend l'élément de blocage (25) de la bague de blocage(4), de telle sorte que l'élément de blocage (25) de la bague de blocage (4) soit accessible par l'extérieur et qu'un déplacement de la bague de blocage (4) par rapport à la pièce d'assemblage (12) soit empêché;
et
la bague de retenue étant conçue sous la forme d'une bague de retenue ouverte, dont l'une extrémité comporte un élément d'enclenchement (23) et dont l'autre extrémité comporte un logement d'enclenchement (24), pour refermer par enclenchement l'élément d'enclenchement (23) dans le logement d'enclenchement (24) .

2. Capteur selon la revendication 1, **caractérisé en ce que** la zone d'assemblage (7) de la partie inférieure (2) de capteur et la pièce d'assemblage (12) de la partie supérieure (3) de capteur sont conçues de forme cylindrique et la bague de retenue (4) est de préférence ronde, de manière préférentielle, de forme circulaire.

3. Capteur selon la revendication 1 ou 2, **caractérisé en ce que** la bague de retenue (4) entoure la zone d'assemblage (7) de la partie inférieure (2) de capteur.

4. Capteur selon l'une quelconque des revendications précédentes, **caractérisé en ce que** la bague de retenue (4) est munie d'une paroi (14) pourvue d'une face extérieure (15), d'une face intérieure (115) opposée et de deux côtés étroits (16, 17) et **en ce que** la section transversale de la paroi (14) est de préférence rectangulaire, l'un (16) des côtés étroits étant adjacent à la bride (8) saillant vers l'extérieur en direction radiale de la partie inférieure (2) de capteur et la bague de blocage (4) comportant de préférence sur l'autre côté étroit (17) une collerette (18) dirigée vers l'extérieur, qui élargit le côté étroit (17).

5. Capteur selon l'une quelconque des revendications précédentes, **caractérisé en ce que** sur la face extérieure de la partie inférieure (2) de capteur, des éléments de maintien (9) se raccordent sur la zone d'assemblage (7) et par un côté étroit (16, 17) débordant vers l'extérieur, la bague de retenue (4) est voisine des éléments de maintien (9), les éléments de maintien (9) formant une surface d'appui (10) pour le côté étroit (16, 17) de la bague de retenue (4) et la bague de retenue (4) étant de préférence adjacente aux éléments de maintien (9).

6. Capteur selon l'une quelconque des revendications précédentes, **caractérisé en ce que** la zone d'assemblage (7) de la partie inférieure (2) de capteur est plane et la bague de retenue (4) comporte une face intérieure (115) plane, de telle sorte que la bague de retenue (4) soit déplaçable, de préférence susceptible de coulisser, de manière particulièrement préférentielle, susceptible de tourner par rapport à la partie inférieure (2) de capteur.

7. Capteur selon l'une quelconque des revendications précédentes, **caractérisé en ce que** la bague de retenue (4) est fixée par rapport à la pièce d'assemblage (12) de la partie supérieure (3) de capteur et/ou **en ce que** l'élément de blocage (25) comporte un point de rupture théorique (37).

8. Capteur selon l'une quelconque des revendications précédentes, **caractérisé en ce que** sur sa face extérieure (15), la bague de retenue (4) comporte des crochets d'enclenchement (26), qui sont conçus de préférence de manière élastique, de préférence, les crochets d'enclenchement (26) s'étendant vers l'extérieur dans la direction circonférentielle de la bague de retenue (4) et de manière particulièrement préférentielle, les crochets d'enclenchement (26) étant intégrés dans la paroi (14) de la bague de retenue (4).

9. Capteur selon la revendication 8, **caractérisé en ce que** les crochets d'enclenchement (26) comportent un chanfrein (39), destiné à faciliter l'emmanchement de la partie supérieure (3) de capteur, le chanfrein (39) étant placé de préférence sur l'extrémité (26a) libre du crochet d'enclenchement (26), sur l'angle orienté vers la partie supérieure (3) de capteur et vers l'extérieur.

10. Capteur selon l'une quelconque des revendications précédentes 8 ou 9, **caractérisé en ce que** la pièce d'assemblage (12) de la partie supérieure (3) de capteur comporte des évidements d'enclenchement (27), dans lesquels les crochets d'enclenchement (26) de la bague de retenue (4) s'étendent et s'enclenchent dans les évidements d'enclenchement (27).

11. Capteur selon l'une quelconque des revendications précédentes, **caractérisé en ce que** la partie supérieure (3) de capteur comporte un adaptateur, destiné à recevoir un module arithmétique (20) ou à se connecter sur celui-ci, l'adaptateur pouvant être un couvercle, un élément de montage ou la coque inférieure (22) du module arithmétique (20).

12. Procédé, destiné à l'assemblage sécurisé d'une partie inférieure (2) de capteur et d'une partie supérieure (3) de capteur d'un capteur de débit (1), comprenant les étapes suivantes consistant à :
- mettre à disposition une partie inférieure (2) de capteur, destinée à recevoir un élément capteur, la partie inférieure (2) de capteur étant munie d'un boîtier (6), qui sur une extrémité est muni d'une zone d'assemblage (7) et sur l'autre extrémité opposée est muni d'une zone de raccordement (5), destinée à raccorder le capteur (1) sur la conduite, la zone d'assemblage (7) étant munie d'une bride (8) saillant vers l'extérieur,
- mettre à disposition une partie supérieure (3) de capteur, destinée à recevoir un détecteur pour la détection d'un déplacement de l'élément capteur, la partie supérieure (3) de capteur comportant un boîtier (11) doté sur une extrémité d'une pièce d'assemblage (12) en forme de collet, dont les dimensions sont supérieures à celles de la bride (8) de la partie inférieure (2) de capteur, de telle sorte que la pièce d'assemblage (12) puisse être emmanchée par-dessus la zone d'assemblage (7) de la partie inférieure (2) de capteur,
- mettre à disposition une bague de retenue (4) ouverte, dont l'une des extrémités comporte un élément d'enclenchement (23) et dont l'autre extrémité comporte un logement d'enclenchement (24),
- poser la bague de retenue (4) ouverte autour de la zone d'assemblage (7) de la partie inférieure (2) de capteur, de préférence de telle sorte qu'un côté étroit (16, 17) de la bague de retenue (4) soit adjacente à un élément de maintien (9), qui sur la face extérieure de la partie inférieure (2) de capteur se raccorde sur la zone d'assemblage (7) et que de préférence, un autre côté étroit (16, 17) de la bague de retenue (4) soit adjacente à la bride (8) de la partie inférieure (2) de capteur,
- fermer les extrémités ouvertes de la bague de retenue (4), par enclenchement de l'élément d'enclenchement (23) dans le logement d'enclenchement (24),
- par sa pièce d'assemblage (12), emmancher la partie supérieure de capteur par-dessus la bride (8) et la zone d'assemblage (7) de la partie inférieure (2) de capteur et par-dessus la bague de retenue (4), de préférence les crochets d'enclenchement (26) s'enclenchant sur la face extérieure (15) de la bague de retenue (4) dans des évidements d'enclenchement (27) correspondants sur la face intérieure de la pièce d'assemblage (12) de la partie supérieure (3) de capteur et de sorte que la partie supérieure (3) de capteur soit assemblée avec la partie inférieure (2) de capteur et un élément de blocage (25) de la bague de retenue (4) étant placé dans l'encoche (13) dans la pièce d'assemblage (12) de la partie supérieure (3) de capteur.

13. Procédé, destiné à réviser un capteur de débit (1) doté d'une partie supérieure (3) de capteur pourvue d'un détecteur, d'une partie inférieure (2) de capteur pourvue d'un élément capteur et d'une bague de retenue (4) placée entre la partie supérieure (3) de capteur et la partie inférieure (2) de capteur,
- la partie inférieure (2) de capteur étant munie d'un boîtier (6) qui sur une extrémité, comporte une zone d'assemblage (7) et sur l'autre extrémité opposée comporte une zone de raccordement (5), destinée à raccorder le capteur (1) sur la conduite,
- la partie supérieure (3) de capteur comportant un boîtier (11) doté sur une extrémité d'une pièce d'assemblage (12) en forme de collet, dont les dimensions sont supérieures à celles de la bride (8) de la partie inférieure (2) de capteur, de telle sorte que la pièce d'assemblage (12) saillisse par-dessus la zone d'assemblage (7) de la partie inférieure (2) de capteur et par-dessus la bague de retenue (4) et les recouvre,
- la pièce d'assemblage (12) de la partie supérieure (3) de capteur comportant une encoche (13) dans laquelle un élément de blocage (25) de la bague de retenue (4) s'étend de telle sorte que l'élément de blocage (25) soit accessible par l'extérieur,
- sur la face extérieure (15), la bague de retenue (4) comportant des crochets d'enclenchement (26), qui s'enclenchent dans des évidements d'enclenchement (27) correspondants sur la face intérieure de la pièce d'assemblage (12) de la partie supérieure (3) de capteur et empêchent ainsi que la partie supérieure (3) de capteur se désolidarise de la partie inférieure (2) de capteur, et
- l'élément de blocage (25) étant conçu pour bloquer la bague de retenue (4) en empêchant un déplacement relatif entre la bague de retenue (4) et la partie supérieure (3) de capteur et lorsque la bague de retenue (4) est montée entre la partie inférieure (2) de capteur et la partie supérieure (3) de capteur, le blocage ne pouvant pas être désolidarisé de manière non destructive,
comprenant les étapes suivantes, consistant à :
- retirer l'élément de blocage (25) de la bague de retenue (4) en rompant une patte, de préférence pourvue d'un point de rupture théorique (37),
- retirer au moins des parties de l'élément de blocage (25),
- faire tourner la bague de retenue (4) dans la direction circonférentielle, jusqu'à ce que les crochets d'enclenchement (26) soient déplacés hors des évidements d'enclenchement (27) correspondants, de sorte à permettre que la partie supérieure (3) de capteur soit désolidarisée de la partie inférieure (2) de capteur,
- éloigner l'une de l'autre la partie supérieure (3) de capteur et la partie inférieure (2) de capteur à la transversale de la direction circonférentielle de la bague de retenue (4), de telle sorte que l'élément capteur dans la partie inférieure (2) de capteur ou le détecteur dans la partie supérieure (3) de capteur soient accessibles pour une révision.
